# EUROPÄISCHE PATENTSCHRIFT

(11) **EP 2 298 538 B1**
(45) Veröffentlichungstag und Bekanntmachung des Hinweises auf die Patenterteilung: **15.01.2020**
(21) Anmeldenummer: 10008966.3
(22) Anmeldetag: 28.08.2010
(51) Int. Cl.: B29C 65/18, B29L 31/00, B29C 65/00, B29C 65/30, B31B 160/20, B31B 155/00, B29C 65/50

(54) **Vorrichtung zum Längsschweißen von Kunststofffolien**
Device for longitudinal welding of plastic films
Dispositif de soudure longitudinale de films en plastique

(30) Priorität: 16.09.2009 DE 102009041411
(43) Veröffentlichungstag der Anmeldung: 23.03.2011
(73) Patentinhaber: LEMO Maschinenbau GmbH, 53859 Niederkassel-Mondorf (DE)
(72) Erfinder: Schneider, Jakob, 53859 Niederkassel (DE)
(74) Vertreter: Greif, Thomas

(56) Entgegenhaltungen:
- EP-A2- 0 917 946
- WO-A1-01/53153
- WO-A1-02/087983
- DE-A1- 1 966 085
- DE-A1- 2 623 005
- DE-A1- 19 541 617
- DE-U1- 8 211 985
- FR-A1- 2 367 672
- US-A- 4 692 135
- US-A1- 2004 234 174

## Beschreibung

Die Erfindung betrifft eine Vorrichtung zum Längsschweißen von Kunststofffolien zur Herstellung von Beuteln, Taschen und dergleichen.

Bei der Herstellung von Beuteln, Taschen oder ähnlichem aus thermoplastischen Kunststofffolien ist es in der Regel erforderlich, zwei übereinanderliegend zugeführte Folien in Längsrichtung, also in Transportrichtung der Folien, zu verschweißen. Dazu werden die zu verschweißenden Folien zur Herstellung der Schweißnaht mittels eines oder mehrerer Schweißelemente erhitzt, wobei die Folien taktweise vorgezogen werden.

Aus der DE-PS 1457232 sind ein Verfahren und eine Vorrichtung zur Herstellung einer Tragetasche aus thermoplastischer Kunststofffolie bekannt, bei dem (der) mittels elektrischer Heizeinrichtungen aufheizbare Schweißbalken verwendet werden. Zwischen den Schweißflächen der Schweißbalken und der Folie sind jeweils Bänder aus Teflon angeordnet, die mit der Folie mitlaufen. Die Teflonbänder sind nicht angetrieben.

Die DE 82 11 985 U1 offenbart eine Vorrichtung zum Längsschweißen von Folien aus thermoplastischem Kunststoff gemäß dem Oberbegriff des Patentanspruchs 1. Ferner wird auf die Druckschriften DE 195 41 617 A1, DE 26 23 005 A1, DE 19 66 085 A1 und WO 01/53153 A1 verwiesen.

Der Erfindung liegt die Aufgabe zugrunde, eine Vorrichtung bereitzustellen, bei der zur Leistungssteigerung in der Produktion Folien kontinuierlich in Längsrichtung verschweißt werden können, wobei zugleich die Qualität der Schweißnaht, insbesondere ihre Haltbarkeit und ihre Optik, gesteigert wird.

Diese Aufgabe wird mit den Merkmalen des Patentanspruchs 1 gelöst.

Die Zeichnung dient zur Erläuterung der Erfindung. Anhand von vereinfacht dargestellten Ausführungsbeispielen. Es zeigen:
- Figur 1: Schematisch den Aufbau einer erfindungsgemäßen Vorrichtung in Seitenansicht
- Figur 2: zeigt die zugehörige Draufsicht
- Figur 3: zeigt als Längsschnitt den Aufbau einer Vorrichtung zur Herstellung einer doppelten Seitenfalte und
- Figur 4: zeigt die Herstellung einer überlappenden Schweißnaht.

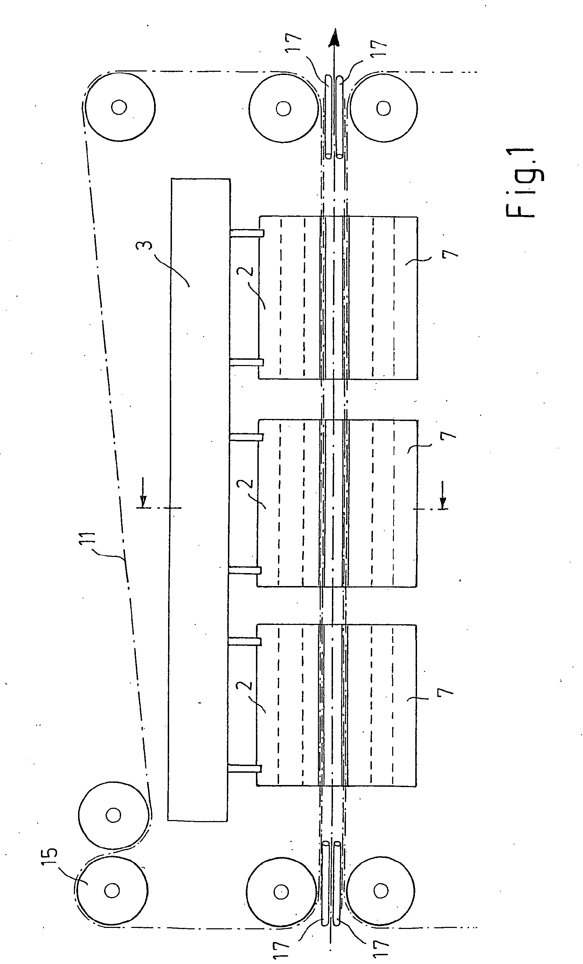

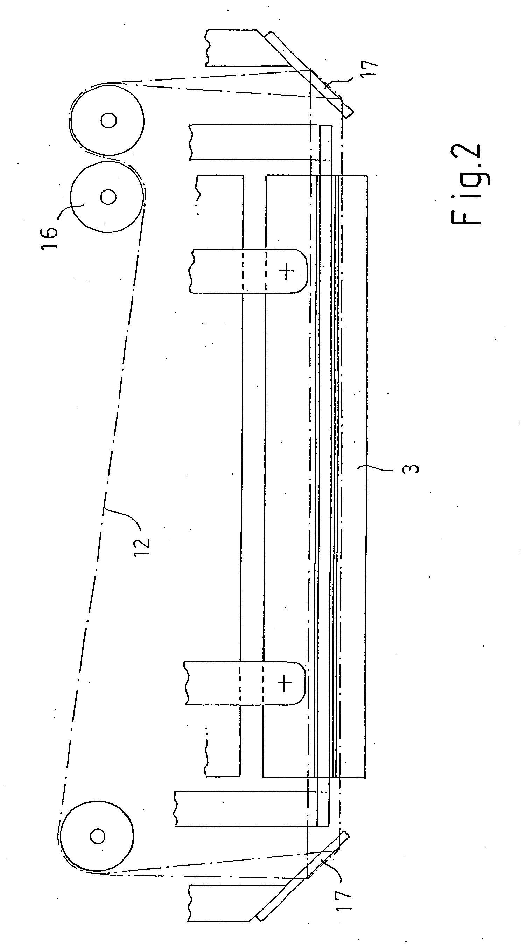

Die in den Figuren dargestellte Vorrichtung ist ein Bestandteil einer Maschine zur Herstellung von Beuteln, Taschen oder dergleichen aus Kunststofffolien und dient zum Längsschweißen der Kunststofffolien. Beim Längsschweißen werden zwei übereinanderliegend zugeführte Folien miteinander verschweißt, wobei eine oder mehrere sich in Transportrichtung der Folie 1 erstreckende Schweißnähte entstehen. Die Vorrichtung enthält zumindest einen Schweißbalken 2, der im Gestell der Vorrichtung an einem sich in Folienlaufrichtung erstreckenden Tragholm 3 befestigt ist. Bei der Ausführungsform nach Figur 1 und 2 enthält die Vorrichtung zum Beispiel drei mit geringem Abstand hintereinander angeordnete Schweißbalken 2, von denen jeder mittels eines Heizelements 4 aufheizbar ist. Jeder Schweißbalken 2 hat an seiner Innenseite, also der Seite, die der Folie 1 zugewandt ist, eine ebene Kontaktfläche, deren Breite der gewünschten Breite der Schweißnaht entspricht. Damit ausreichend Zeit zum Erhitzen der Folie 1 vorhanden ist, sind drei Schweißbalken 2 hintereinander angeordnet und die Länge der Kontaktfläche in Folienlaufrichtung jedes Schweißbalkens 2 beträgt mindestens 100 mm.

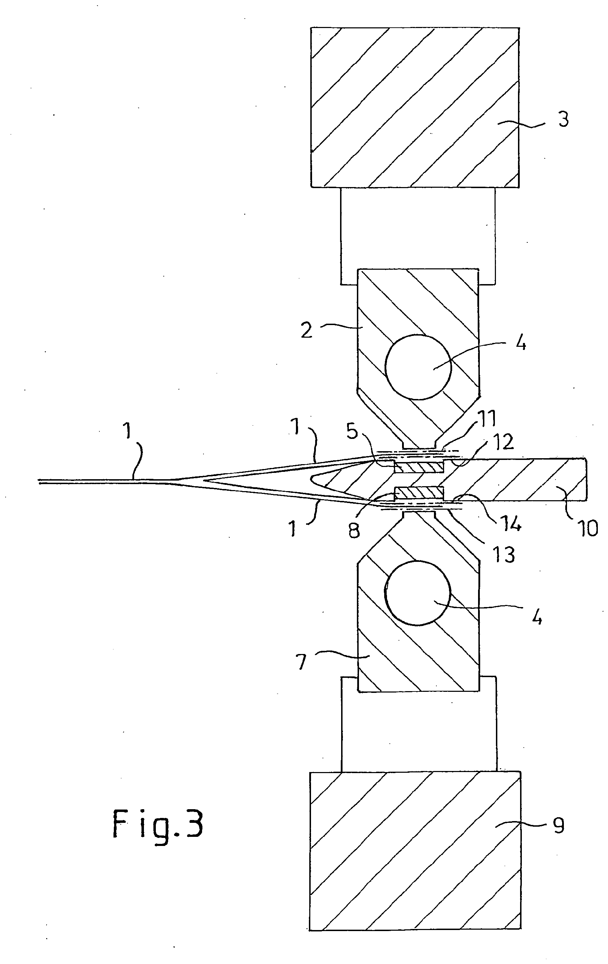

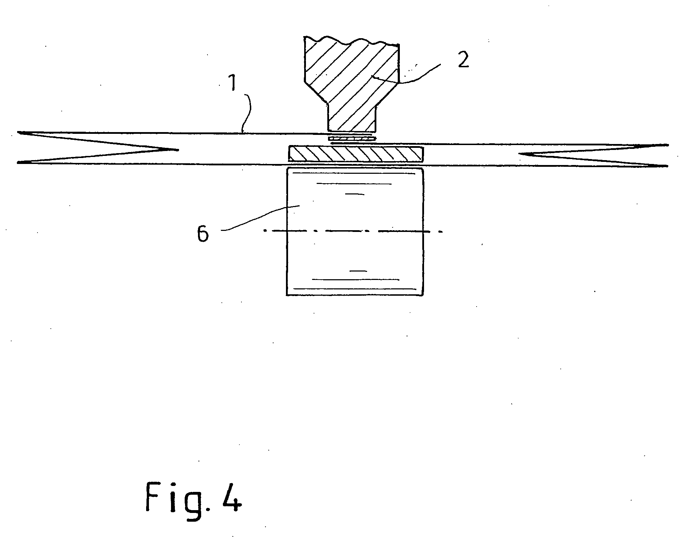

Um die Folien 1 beim Schweißen auf ihrer dem Schweißbalken 2 abgewandten Rückseite abzustützen, ist dort ein Abstützelement angeordnet, das eine zur Kontaktfläche des Schweißbalkens 2 parallele Abstützfläche aufweist. Zum Verschweißen werden jeweils zwei Folien 1 zwischen der Kontaktfläche des Schweißbalkens 2 und dem Abstützelement hindurchgeführt. Bevorzugt ist das Abstützelement, wie in Figur 3 dargestellt, als Innenheizelement 5 gestaltet, so dass die Folien 1 von beiden Seiten aufgeheizt werden können. Bevorzugt werden für die Innenheizelemente 5 Heizbänder verwendet, die in Abstützplatten eingelegt sind. Falls nur eine Schweißnaht an einer Seite erzeugt wird, kann als Abstützelement eine rotierende Stützrolle 6 eingesetzt werden, die den Träger des Innenheizelements abstützt, wie in Figur 4 dargestellt ist. Die dort dargestellte Vorrichtung dient zum Verschweißen von sich überlappenden Folien 1.

In den Figuren 1 bis 3 ist eine Ausführungsform dargestellt, bei dem an einer Längsseite einer schlauchförmigen Folie 1 eine Doppelfaltung durchgeführt wird, wobei jede der beiden Falten am Ende verschweißt wird. Dazu wurde vorher durch entsprechende Faltschwerter eine Innenfalte erzeugt. Obwohl in den Figuren nur das Verschweißen an einer Längsseite der Maschine dargestellt ist, können an der anderen Längsseite entsprechende Elemente angeordnet sein, um dort ebenfalls die Folien 1 zu verschweißen.

Bei der Ausführungsform nach den Figuren 1 bis 3 ist jeweils spiegelbildlich zu dem oberen Schweißbalken 2 ein unterer Schweißbalken 7 angeordnet, der an einem unteren Tragholm 9 befestigt ist und die vorstehend zum Schweißbalken 2 beschriebenen Elemente aufweist. Das untere innere Heizelement 8 ist zweckmäßigerweise gemeinsam mit dem oberen inneren Heizelement 5 in einem plattenförmigen Träger befestigt, so dass jeweils eine Doppelfolie 1 zwischen dem oberen Schweißbalken 2 und dem oberen inneren Heizelement 5 und zwischen dem unteren Schweißbalken 7 und dem unteren inneren Heizelement 8 verschweißt werden kann.

Zwischen den Schweißbalken 2, 7 als Schweißelemente und den zu verschweißenden Folien 1 ist jeweils ein mitlaufendes Band 11 - 14 angeordnet, das aus einem temperaturbeständigen, reibungsarmen Material, bevorzugt aus Teflon, gefertigt ist und das die Kontaktfläche des Schweißelements (Schweißbalken 2, 7) abdeckt. Jedes Teflonband 11 - 14 hat einen Förderantrieb mit einer zugehörigen Steuerung, die so gestaltet sind, dass das Band kontinuierlich mit der Fördergeschwindigkeit der Folien 1 antreibbar ist. Bei der Ausführungsform nach Figur 1 bis 4 mit den jeweils zwei Schweißelementen an jeder Längsseite sind auch an jeder Längsseite 4 Bänder 11 - 14 angeordnet, von denen jeweils zwei (Bänder 11, 13) außen zwischen den Schweißbalken 2, 7 und der Folie 1 verlaufen. Innen verlaufen zwei weitere Bänder 12, 14 jeweils zwischen einem inneren Heizelement 5, 8 und der Folie. Angetrieben wird jedes Band 11 - 14 von einer Antriebsrolle 15, 16, die jeweils mit einem Antriebsmotor als Förderantrieb verbunden ist, der mittels einer Steuerung so antreibbar ist, dass jedes Band 11 - 14 mit der Fördergeschwindigkeit der Folien 1 bewegt wird.

In der Seitenansicht von Figur 1 ist dargestellt, dass die jeweiligen Außenbänder endlos umlaufende Bänder sind, die vor und hinter der Heizstrecke jeweils nach oben zu ihrer Antriebsrolle 15 geführt werden. Der Rücklauf jedes Außenbandes 11, 13 befindet sich so oberhalb oder unterhalb des zugehörigen Tragholms 3, 9.

Die Innenbänder 12, 14 sind ebenfalls endlos umlaufend und werden vor und hinter der Heizstrecke im Wesentlichen horizontal mittels Wendestangen 17 seitlich nach außen geführt, wie in der Draufsicht nach Figur 2 dargestellt ist. Seitlich neben der Heizstrecke umschlingen sie Antriebswalzen 16, von denen sie kontinuierlich mit der Fördergeschwindigkeit der Folien 1 angetrieben werden. Dazu ist jede Antriebsrolle 16 mit einem entsprechenden Drehantrieb und einer entsprechenden Steuerung verbunden.

Bei einer Verwendung der Vorrichtung gemäß der Erfindung werden die zu verschweißenden Folien 1 kontinuierlich zwischen den Schweißbalken 2, 7 als Schweißelemente und den Abstützelementen hindurch transportiert, die bei der Ausführungsform nach den Figuren 1 bis 4 als Träger 10 mit darin gelagerten Innenheizelementen 5, 8 gestaltet sind. Zwischen einem Schweißelement (Schweißbalken 2, 7; Innenheizelemente 5, 8) und der Folie 1 verläuft jeweils ein angetriebenes Teflonband 11 - 14, das kontinuierlich mit der Transportgeschwindigkeit der Folien 1 bewegt wird, so dass keine Relativbewegung zwischen einem Band 11 - 14 und einer Folie 1 auftritt.

## Patentansprüche

1. Vorrichtung zum Längsschweißen von Folien (1) aus thermoplastischem Kunststoff, mit
- einem aufheizbaren Schweißelement (2), über dessen Kontaktfläche zumindest zwei Folien (1) übereinanderliegend geführt werden,
- einem Abstützelement zum Abstützen der Folien (1) auf ihrer dem Schweißelement (2) abgewandten Rückseite und
- einem zwischen dem Schweißelement (2) und den Folien (1) angeordneten mitlaufenden Band (11-14) aus einem temperaturbeständigen, reibungsarmen Material, insbesondere aus Teflon, das die Kontaktfläche des Schweißelements (2) abdeckt,
wobei das mitlaufende Band (11-14) einen Förderantrieb mit einer zugehörigen Steuerung aufweist, der es ermöglicht, es kontinuierlich mit der Fördergeschwindigkeit der Folien (1) anzutreiben, wobei in das Abstützelement ein weiteres Heizelement integriert ist, **dadurch gekennzeichnet, dass** die Vorrichtung folgende Merkmale aufweist:
- Zwei spiegelbildlich übereinander angeordnete Schweißbalken (2, 7),
- zwischen den beiden Schweißbalken (2, 7) angeordnete Abstützelemente, die als Innenheizelemente (5, 8) gestaltet sind, und mit
- vier angetriebenen Bändern (11-14) aus einem temperaturbeständigen, reibungsarmen Material, von denen zwei zwischen dem oberen aufheizbaren Schweißelement (2) und dem darunter angeordneten Abstützelement (5) und zwei zwischen dem unteren Schweißelement (7) und dem darüber angeordneten Abstützelement (8) hindurchgeführt werden, wobei
- jeweils zwei übereinanderliegende Folien (1) zwischen den beiden oberen Bändern (11, 12) und zwei übereinanderliegende Folien (1) zwischen den unteren Bändern (13, 14) hindurchgeführt werden.

## Claims

1. Device for longitudinal welding of films (1) of thermoplastic material, comprising
- a heatable welding element (2), over the contact area of which at least two films (1) are led, lying one on top of the other,
- a supporting element for supporting the films (1) on their rear side, facing away from the welding element (2), and
- a concurrently running band (11-14) of a temperature-resistant, low-friction material, in particular of Teflon, which is arranged between the welding element (2) and the films (1) and covers the contact area of the welding element (2),
wherein the concurrently running band (11-14) has a conveying driver with an associated controller, which allows it to be driven continuously at the conveying speed of the films, wherein a further heating element is integrated in the supporting element, **characterized in that** the device has the following features:
- two welding bars (2, 7) arranged mirror-invertedly one over the other,
- supporting elements arranged between the two welding bars (2, 7),
which supporting elements are designed as inner heating elements (5, 8), and with
- four driven bands (11-14) of a temperature-resistant, low-friction material, of which two are led through between the upper heatable welding element (2) and the supporting element (5) arranged thereunder and two are led through between the lower welding element (7) and the supporting element (8) arranged thereover, wherein
- in each case two films (1) lying one on top of the other are led through between the two upper bands (11, 12) and two films (1) lying one on top of the other are led through between the lower bands (13, 14) .

## Revendications

1. Dispositif de soudure longitudinale de films (1) en matière plastique thermoplastique, comprenant
- un élément de soudure chauffable (2) sur la surface de contact duquel sont guidés au moins deux films (1) disposés l'un au-dessus de l'autre,
- un élément de support pour supporter les films (1) sur leur côté arrière opposé à l'élément de soudure (2) et
- une bande (11-14) entraînée en même temps, disposée entre l'élément de soudure (2) et les films (1), constituée d'un matériau à faible friction résistant à la température, en particulier en téflon, qui recouvre la surface de contact de l'élément de soudure (2),
la bande (11-14) entraînée en même temps présentant un entraînement d'avance avec une commande associée qui permet de l'entraîner en continu à la vitesse d'avance des films (1),
un élément de chauffage supplémentaire étant intégré dans l'élément de support,
**caractérisé en ce que** le dispositif présente les caractéristiques suivantes :
- deux poutres de soudure (2, 7) disposées avec une symétrie spéculaire l'une au-dessus de l'autre,
- des éléments de support disposés entre les deux poutres de soudure (2, 7), qui sont configurés sous forme d'éléments de chauffage intérieurs (5, 8), et avec
- quatre bandes entraînées (11-14) en matériau à faible friction résistant à la température, dont deux sont guidées entre l'élément de soudure chauffable supérieur (2) et l'élément de support (5) disposé en dessous et deux sont guidées entre l'élément de soudure inférieur (7) et l'élément de support (8) disposé au-dessus,
- à chaque fois deux films (1) disposés l'un au-dessus de l'autre étant guidés entre les deux bandes supérieures (11, 12) et deux films (1) disposés l'un au-dessus de l'autre étant guidés entre les bandes inférieures (13, 14).
